# EUROPEAN PATENT SPECIFICATION

(11) **EP 2 165 397 B1**
(45) Date of publication and mention of the grant of the patent: **04.09.2013**
(21) Application number: 08779421.0
(22) Date of filing: 07.07.2008
(51) Int. Cl.: H02G 3/22

(54) **CABLE FITTING ARRANGEMENT**
KABELVERSCHRAUBUNGSANORDNUNG
AGENCEMENT DE RACCORD DE CÂBLE

(30) Priority: 05.07.2007 WO PCT/SE2007/000665
(43) Date of publication of application: 24.03.2010
(73) Proprietor: Cyrba AB, 436 32 Askim (SE)
(72) Inventor: SANDBERG, Jonny, S-436 39 Askim (SE)
(74) Representative: Friberg, Ingvar
(86) International application number: PCT/SE2008/050844
(87) International publication number: WO 2009/005472

(56) References cited:
- WO-A2-2007/007046
- WO-A2-2007/007046
- DE-C1- 4 020 180
- DE-C1- 4 020 180
- US-A- 3 830 954

## Description

### TECHNICAL FIELD

This invention relates to a cable fitting arrangement for connecting a cable to an electronic device in watertight installations.

### BACKGROUND ART

Installation of electric cables to connecting boxes, dishwashers, washing machines and other electronic devices for outdoor or wet room use normally involves connecting the cables electrically, arranging a watertight sealing and fastening the cable mechanically such that the electrical connection is not subjected to mechanical stress.

A conventional cable fitting for such a use comprises a threaded sleeve, a compressible sealing gasket and a nut which parts are threaded onto the cable. One end of the sleeve is connectable to the electronic device and the other end is provided with flexible fingers for clamping the gasket to the cable when the nut is threaded onto the sleeve. After having connected the cable electrically to the electronic device, e.g. by splicing and clamping the cable by means of screws, the sleeve is threaded onto the electronic device and the nut is tightened onto the sleeve so that the gasket both seals around the cable and holds the cable in place. An example of such a fitting is disclosed in DE 19544963.

A problem related to such a conventional cable fitting is that the cable has a tendency to get loose at higher tension loads if the nut is not very firmly tightened. On the other hand, if the nut is too firmly tightened the cable becomes compressed so that the insulation distance within the cable becomes too short. This, in turn, increases the risk of creating short cuts.

A general problem with installation of electric cables is that it is a relatively time-consuming operation.

### DISCLOSURE OF INVENTION

An object of this invention is to provide a cable fitting that exhibit improved sealing, cable fastening and installation properties compared to conventional cable fittings for watertight attachment of electric cables to electronic devices. This object is achieved by the cable fitting arrangement defined by the technical features contained in independent claim 1. The dependent claims contain advantageous embodiments, further developments and variants of the invention.

The invention concerns a cable fitting arrangement for connecting a cable to an electronic device, said cable fitting arrangement comprising: a sealing means arranged for sealing around the cable and for securing the cable; and a clamping means for enclosing the sealing means around the cable such as to provide sealing and to secure the cable; wherein the cable fitting arrangement is arranged to be fastened in a watertight manner to a part, such as a housing, of the electronic device. The inventive cable fitting arrangement is characterized in that the clamping means comprises at least a channel system which is arranged to circumferentially surround the cable, and said channel system is arranged to be filled with the sealing means. Thus, the sealing means is arranged to seal the able fitting arrangement in a water tight manner.

An advantageous effect of this design is that the cable may be provided with a connector during installation. This is not possible in conventional cable fittings with a narrow, closed compressible gasket because, in practice, all connectors have a larger cross section than the cable for which the compressible means is dimensioned for. The invention thus makes it possible to make use of prefabricated cables with connectors already mounted. By providing the electronic device, to which the cable is to be connected, with a sufficiently large opening for allowing passage of the type of connector to be used, and by adapting the cable fitting arrangement to the dimensions of the opening, the invention simplifies and speeds up installation of cables significantly since the connector can simply be connected to a corresponding connector in the electronic device. Thus, no time-consuming splicing and screwing are needed for connecting the cable electrically to the electronic device. The invention also makes it possible to use prefabricated cables in situations where the connector needs to be moved out from the electronic device, such as when the other end of the cable is soldered to a circuit board forming part of the electronic device.

In an embodiment of the invention, said clamping means, including said channel system, comprises at least a first and at least a second recess. A first part of said channel system is arranged in said first and second recesses and which first part of said channel system is arranged to surround said cable.

Further said clamping means comprises a second part of said channel system, which second part is arranged to extend between and connect adjacent first and/or second recesses, to allow said sealing means to flow between adjacent first and second recesses. Said sealing means can be a floating sealing compound, for example an electronic silicone. Thus, said second part of said channel system is arranged in the interface between clamping means.

Preferably, said first part of said channel system can have a cross-section shaped as a half-pipe and said second part of said channel system can have a cross-section shaped as a pipe.

In an embodiment of the invention said channel system is connected to an inlet, through which said sealing compound is feed, and an outlet, through which air contained in the channel system and surplus of said sealing compound is arranged to flow when said channel is filled.

In an embodiment of the invention said clamping means comprises a first clamping member and a second clamping member, wherein said first recesses are arranged, which recesses extends in a longitudinal direction of said cable and having a semi-circular cross-section as to form a seat for a circular cable of a corresponding dimension. Said clamping means comprises an insert clamping member, which is arranged between said first and second clamping members. Said second recesses are arranged in said insert clamping member, which recesses extends in a longitudinal direction of said cable and having a semi-circular cross-section as to form a seat for a cylindrical cable of a corresponding dimension. The recesses can have different diameter as to receive cables of different dimensions.

In an embodiment of the invention the cable fitting arrangement is arranged to cover an opening of the electronic device when fastened to the electronic device, wherein the opening is significantly larger than what is formed by the channel system. The opening is dimensioned such as to allow a cable connector to pass through the opening. At least one of the first or the second clamping members is arranged to be fastened in a watertight manner to a part of the electronic device.

### BRIEF DESCRIPTION OF DRAWINGS

In the description of the invention given below, reference is made to the following figures, in which:
- Figures 1-5: show a step-by-step assembly of an embodiment of the invention, and
- Figure 6: shows a sectional view A-A according to figure 5.

### EMBODIMENT(S) OF THE INVENTION

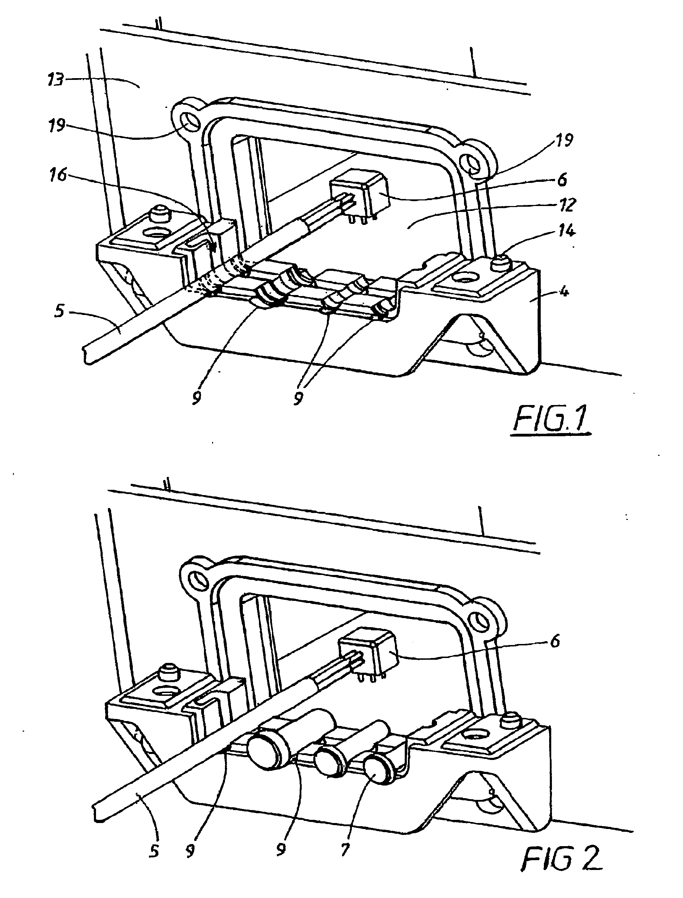

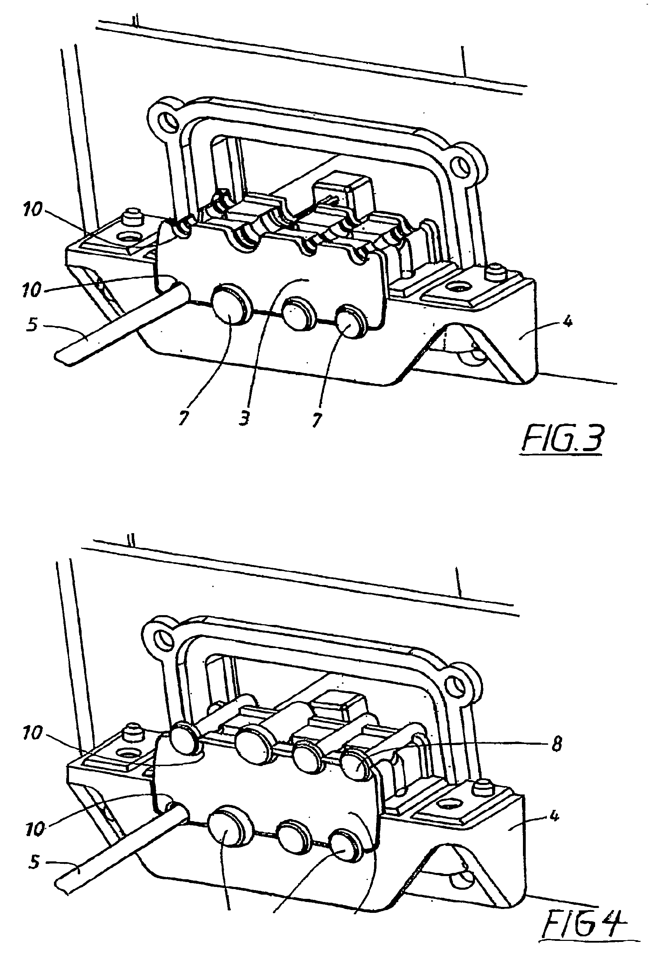

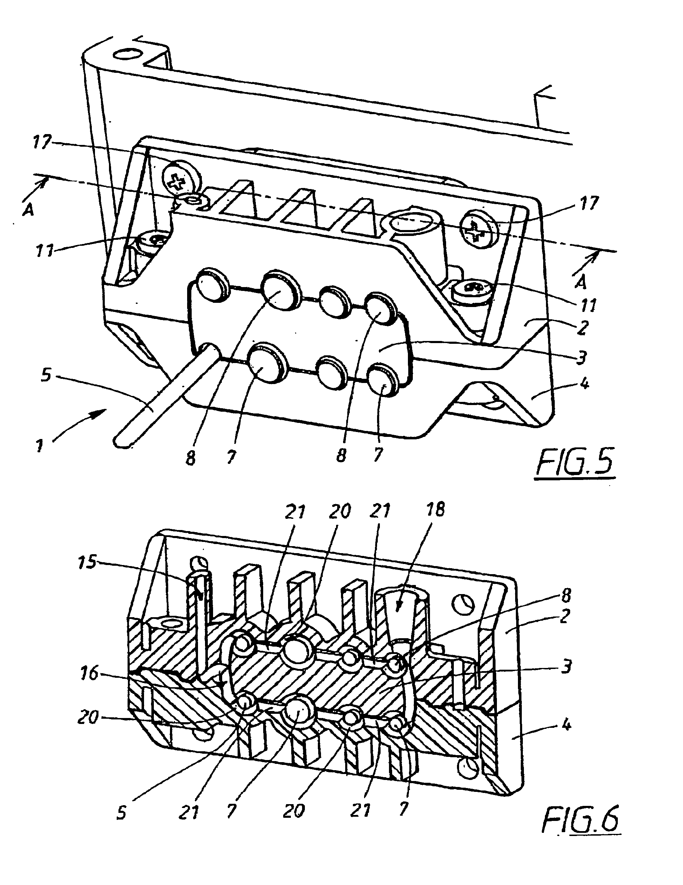

Figure 5 shows an embodiment of an inventive cable fitting arrangement 1 comprising an upper clamping member 2, an insert clamping member 3, and a lower clamping member 4. Figure 5 further shows a cable 5 provided with a connector (not shown) and first and second sets of plugs 7, 8. The cable fitting arrangement 1 has recesses (shown in Figure 1 and 3) with different diameters such as to allow cables of different diameters to fit into the seats and units.

Up to eight cables 5 can be arranged in the cable fitting arrangement 1 shown in figure 5; four arranged in each of the upper and lower clamping members 2, 4. The plugs 7, 8 are used to provide sealing in places not occupied by cables 5.

The upper and lower clamping members 2, 4 are pressed together, and thereby also the components 3, 5, 7, 8 arranged between them, by means of first screws 11 and first set of holes (not shown). First recesses 9 are arranged in the upper and lower clamping members 2, 4 and second recesses 10 are arranged in the insert clamping member 3 which recesses 9, 10 are adapted to fit around the outside of the cable 5 or the plugs 7, 8, such as to distribute the clamping force radially towards the cable 5 or the plugs 7, 8 when the clamping means are brought together.

Figure 1 shows an early step in the process of assembling the cable fitting arrangement 1 shown in figure 5 and its mounting over an opening 12 in a casing 13 of an electronic device. The electronic device may be e.g. a connection or distribution box or an electronic apparatus such as a washing machine. A gasket (not shown) is arranged around the opening 12 between the cable fitting arrangement 1 and the casing 13 for providing a watertight connection. The casing 13 may or may not have a lid (with a lid sealing) for facilitating connection of the connectors.

The cable fitting arrangement 1 is further provided with pins 14 and holes (not shown), of which only some are shown in figure 1, for facilitating proper positioning of the clamping members 2, 3, 4 in relation to each other.

The lower clamping member 4 is attached to the electronic device by means of screws (not shown). The cable fitting arrangement 1 is provided with a channel system 16 (partially shown), which enclose the circumference of the cable 5 and the first and second sets of plugs 7, 8. The opening 12 of the electronic device can be significantly larger than what is formed by the channel system 16, which channel system is described in detail in relation to Figure 6. Further, the opening 12 is dimensioned such as to allow a cable connector 6 to pass through the opening 12.

Further shown in Figure 1, the lower clamping member 4 is provided with first recesses 9, which extend in a longitudinal direction of the cable 5 and has a semi-circular cross-section, which forms a seat of a circular cable 5 of a corresponding dimension. The upper clamping member 2 (shown in Figure 5) also has first recesses 9, which are designed in the same manner as in the lower clamping member 4.

In figure 2, the cable 5 and the plugs 7 are shown. At connection of the cable 8 and its connector 6 to the electronic device, the cable 5 is positioned somewhat above the lower clamping member 4, whereafter the connector 6 can be inserted inside the electronic device through the opening 12 and be connected to a corresponding connector (not shown) inside the electronic device.

After the cable 5 has been connected to the corresponding connector (not shown) in the electronic device, the cable 5 is placed in one of the first recesses 9 in the lower clamping member 4. The first set of plugs 7 has been positioned in the remaining first recesses 9 of the lower clamping member 4 for providing sealing in places not occupied by cables 5.

Figure 3 shows the insert clamping member 3 positioned on top of the lower clamping member 4 and the cable 5 and the plugs 7. The cable 5 and plugs 7, 8 are accommodated in second recesses 10 provided in the insert clamping member 3. The second recesses 10 are provided on two opposite sides of the insert clamping member 3, which second recesses 10 are arranged to coincide with the first recesses 9 in the lower and upper clamping members 2, 4. The second recesses 10 extend in a longitudinal direction of the cable 5 and has a semi-circular cross-section, which forms a seat for a cylindrical cable 5 of a corresponding dimension.

In Figure 4 the second sets of plugs 8 are put in place in second recesses 10 of the insert clamping member 3.

In figure 5, the cable 5 and the first and second sets of plugs 7, 8 are placed in the cable fitting arrangement 1 and upper clamping member 2 is put in place on top of the lower clamping member 4 and the insert clamping member 3. The first screws 11 are passed through holes (not shown) in the upper clamping member 2 and screwed into holes (not shown) in the lower clamping member 4 such as to press the upper and lower clamping members 2, 4, and the components 3, 5, 7, 8 placed in-between, together. A radial force is now provided around the cable 5 and the plugs 7, 8 for sealing and securing purposes and the clamping members 2, 3, 4 become firmly tightened around the cable 5 or the plugs 7, 8 which results in a proper sealing around the cable 5 and a secure fastening of the cable 5.

Second screws 17 are passed through second holes (not shown) in the upper clamping member 2 and screwed into holes 19 (see figure 1) in the casing 13 of the electronic device for fastening the cable fitting arrangement 1 to the electronic device. Thus the cable fitting arrangement 1 in Figure 5 is shown in a fully fastened watertight manner to the electronic device.

Figure 6 shows a sectional view A-A according to figure 5. In Figure 6 the channel system 16 of the cable fitting arrangement 1 is shown, which channel system 16 is arranged in the upper and lower clamping members 2, 4 and in the insert clamping member 3. The channel system 16 is arranged to be filled with sealing means (not shown), and the channel system is provided between the first respectively second recesses 9, 10 and the cable 5 respectively the plugs 7, 8 and to secure the cable 5.

A first part 20 of the channel system 16 is arranged in the first and second recesses 9, 10 to surround the circumference of the cable 5 or the plugs 7, 8, and a second part 21 of the channel system 16 is arranged in the interface between the insert clamping member 3 and the lower clamping member 4 respectively the upper clamping member 2, this to connect adjacent first respectively second recesses 9, 10. The second part 21 of the channel system 16 is a connection arranged between the adjacent first respectively second recesses 9, 10 this to allow the sealing means, such as a floating sealing compound, to flow between adjacent first and/or second recesses 9, 10.

The cable fitting arrangement 1 comprises a first and/or a second set of plugs 7, 8. The plugs in each set can be connected to each other and adapted to fit in the first and second recesses 9, 10 in the clamping members 2, 3, 4. The first and second recesses are of a corresponding dimension as the first and second sets of plugs 7, 8.

The first part 20 of the channel system 16 has a cross-section shaped as a half-pipe and the second part 21 of the channel system 16 has a cross-section shaped as a pipe. The shape of the second part 21 is constituted by a half-pipe in the upper respectively lower clamping members 2, 4 and a half-pipe in the insert clamping member 3, which together constitutes the pipe shaped cross-section. The second part of the channel system provides a seal between interface surfaces of the clamping members 2, 3, 4, when filled with sealing means.

The channel system 16 is connected to an inlet 18, through which the sealing compound is feed, and an outlet 15. The inlet 18 and the outlet 15 can preferably be arranged in two opposite ends of the channel system 16, to create a uniform flow pattern for the sealing compound, and when the sealing compound is feed through the inlet 18, the air contained in the channel system 16 is pushed out through the outlet 15. When the channel system 16 is filled, the surplus of the sealing compound flows out from the outlet 15.

The sealing means provide for a proper sealing and fastening of cables 5, and plugs 7, 8, even if the dimensions of the cables vary slightly, i.e. it takes up cable diameter tolerances. The sealing means also take up variations in dimensions and tolerances of the clamping members 2, 3, 4, especially in the case when the clamping members are made of plastic.

When the cable fitting arrangement 1 is assembled, the sealing means provides a sealing between cables 5 or plugs 7, 8 and the clamping members 2, 3, 4, which are circumferentially surrounded by the sealing means.

The embodiment shown in figures 1-6 may alternatively be designed for reception of only one row of cables 8, i.e. it could contain only one first and one second compressible member. In such a case the insert clamping member 3 is not necessary. Such an alternative cable fitting arrangement can be designed for receiving one or more cables.

The clamping members 2, 3, 4 are preferably made of a rigid plastic. Other rigid materials, such as metal, are also useful. One of the clamping members may form an integral part of the electronic device, e.g. a part of the casing. Moreover, it is not necessary that the cable 8 to be connected is an electrical cable; the inventive cable fitting arrangement 1 is also applicable to optical cables.

The invention is not limited by the embodiments described above but can be modified in various ways within the scope of the claims.

## Claims

1. Cable fitting arrangement for connecting a cable to an electronic device, said cable fitting arrangement comprising:
- a sealing means arranged for sealing around the cable (5) and for securing the cable (5); and
- a clamping means (2, 3, 4) for enclosing the sealing means around the cable (5) such as to provide sealing and to secure the cable (5);
- wherein the cable fitting arrangement (1) is arranged to be fastened in a watertight manner to a part, such as a housing (13), of the electronic device,
**characterized in**
**that** the clamping means (2, 3, 4) comprises at least a channel system (16) which is arranged to circumferentially surround the cable (5), and that said channel system (16) is arranged to be filled with the sealing means,
wherein the channel system (16) is connected to an inlet (18) and an outlet (15) such as to allow a flowing sealing means to be fed to the channel system (16) via the inlet (18).

2. Cable fitting arrangement according to claim 1, **characterized in that** said clamping means (2, 3, 4), including said channel system (16), comprises at least a first and at least a second recess (9, 10), and that a first part (20) of said channel system (16) is arranged in said first and second recesses (9, 10) and which first part (20) of said channel system (16) is arranged to surround said cable (5).

3. Cable fitting arrangement according to claim 1 or 2, **characterized in that** said clamping means (2, 3, 4) comprises said channel system (16), and a second part (21) of said channel system (16) is arranged to extend between and connect adjacent first and/or second recesses (9, 10), to allow said sealing means to flow between adjacent first and second recesses (9, 10).

4. Cable fitting arrangement according to claim 3, **characterized in that** said second parts (21) of said channel system (16) is arranged in the interface between the clamping means (2, 3, 4).

5. Cable fitting arrangement according to claim 3-4, **characterized in that** said first part (20) of said channel system (16) having a cross-section shaped as a half-pipe and said second part (21) of said channel system (16) having a cross-section shaped as a pipe.

6. Cable fitting arrangement according to claim 1-5, **characterized in that** said channel system (16) is connected to an inlet (18), through which said sealing compound is feed, and an outlet (15), through which air contained in the channel system (16) and surplus of said sealing compound is arranged to flow when said channel (16) is filled.

7. Cable fitting arrangement according to claim 1 or 2, **characterized in that** said clamping means (2, 3, 4) comprises a first clamping member and a second clamping member (2, 4), wherein said first recesses (9) are arranged, which recesses (9) extends in a longitudinal direction of said cable (5) and have a semi-circular cross-section as to form a seat for a cylindrical cable of a corresponding dimension.

8. Cable fitting arrangement according to claim 1 or 2, **characterized in that** said clamping means (2, 3, 4) comprises an insert clamping member (3), which is arranged between said first and second clamping members (2, 4), and that said second recesses (10) are arranged in said insert clamping member (3), which recesses (10) extends in a longitudinal direction of said cable (5) and have a semi-circular cross-section as to form a seat for a circular cable of a corresponding dimension.

9. Cable fitting arrangement according to claim 7 or 8, **characterized in that** the recesses (9, 10) have different diameter as to receive cables of different dimensions.

10. Cable fitting arrangement according to anyone of the above claims, **characterized in that** the cable fitting arrangement (1) comprises a first and/or a second sets of plugs (7, 8), wherein the plugs in each set are connected to each other and adapted to fit in the first and second recesses (9, 10) in the clamping members (2, 3, 4).

11. Cable fitting arrangement according to anyone of the above claims, **characterized in that** the cable fitting arrangement (1) is arranged to cover an opening (12) of the electronic device when fastened to the electronic device, wherein the opening (12) is significantly larger than what is formed by the channel system (16).

12. Cable fitting arrangement according to claim 11, **characterized in that** the opening (12) is dimensioned such as to allow a cable connector (6) to pass through the opening (12).

13. Cable fitting arrangement according to claim 7, **characterized in that** at least one of the first or the second clamping members (2, 4) is arranged to be fastened in a watertight manner to a part (13) of the electronic device.

14. Cable fitting arrangement according to claim 1, **characterized in that** said sealing means is a flowing sealing compound.

15. Method for connecting a cable to an electronic device using a cable fitting arrangement according to anyone of the above claims, **characterized in that** it comprises the step of feeding a flowing sealing compound to the channel system (16) via the inlet (18).

## Patentansprüche

1. Kabelverschraubungsanordnung zum Verbinden eines Kabels mit einer elektronischen Vorrichtung, welche Kabelverschraubungsanordnung umfasst:
- ein Dichtungsmittel zum Abdichten um das Kabel (5) herum und zur Befestigung des Kabels (5); und
- ein Klemmmittel (2, 3, 4) zum Einschließen des Dichtungsmittels um das Kabel (5) herum, um ein Abdichten bereitzustellen und das Kabel (5) zu befestigen;
- wobei die Kabelverschraubungsanordnung (1) dazu vorgesehen ist, an einem Teil der elektronischen Vorrichtung, wie beispielsweise einem Gehäuse (13), wasserdicht befestigt zu werden,
**dadurch gekennzeichnet, dass**
das Klemmmittel (2, 3, 4) mindestens ein Kanalsystem (16) umfasst, welches zum Umgeben des Kabels (5) am Umfang vorgesehen ist, und dass das Kanalsystem (16) dazu vorgesehen ist, mit dem Dichtungsmittel gefüllt zu werden,
wobei das Kanalsystem (16) mit einem Einlass (18) und einem Auslass (15) derart verbunden ist, dass ein fließendes Dichtungsmittel über den Einlass (18) in das Kanalsystem (16) eingespeist werden kann.

2. Kabelverschraubungsanordnung nach Anspruch 1, **dadurch gekennzeichnet, dass** das Klemmmittel (2, 3, 4), welches das Kanalsystem (16) umfasst, mindestens eine erste und mindestens eine zweite Aussparung (9, 10) aufweist, und das ein erstes Teil (20) des Kanalsystems (16) in der ersten und der zweiten Aussparung (9, 10) angeordnet ist, und welches erste Teil (20) des Kanalsystems (16) zum Umgeben des Kabels (5) vorgesehen ist.

3. Kabelverschraubungsanordnung nach Anspruch 1 oder 2, **dadurch gekennzeichnet, dass** das Klemmmittel (2, 3, 4) das Kanalsystem (16) umfasst, und dass ein zweites Teil (21) des Kanalsystems (16) dazu ausgebildet ist, sich zwischen den angrenzenden ersten und/oder zweiten Aussparungen (9, 10) zu erstrecken und diese miteinander zu verbinden, um ein Fließen des Dichtungsmittels zwischen den angrenzenden ersten und zweiten Aussparungen (9, 10) zu ermöglichen.

4. Kabelverschraubungsanordnung nach Anspruch 3, **dadurch gekennzeichnet, dass** die zweiten Teile (21) des Kanalsystems (16) in der Schnittstelle zwischen den Klemmmitteln (2, 3, 4) angeordnet sind.

5. Kabelverschraubungsanordnung nach Anspruch 3 bis 4, **dadurch gekennzeichnet, dass** das erste Teil (20) des Kanalsystems (16) einen halbrohrförmigen Querschnitt und das zweite Teil (21) des Kanalsystems (16) einen rohrförmigen Querschnitt aufweist.

6. Kabelverschraubungsanordnung nach Anspruch 1 bis 5, **dadurch gekennzeichnet, dass** das Kanalsystem (16) mit einem Einlass (18) verbunden ist, durch welchen hindurch die Dichtungsmasse eingespeist wird, und mit einem Auslass (15) verbunden ist, durch welchen hindurch in dem Kanalsystem (16) enthaltene Luft und ein Überschuss der Dichtungsmasse strömen können, wenn der Kanal (16) gefüllt wird.

7. Kabelverschraubungsanordnung nach Anspruch 1 oder 2, **dadurch gekennzeichnet, dass** das Klemmmittel (2, 3, 4) ein erstes Klemmelement und ein zweites Klemmelement (2, 4) aufweist, in welchen die ersten Aussparungen (9) angeordnet sind, welche Aussparungen (9) sich in einer Längsrichtung des Kabels (5) erstrecken und einen halbkreisförmigen Querschnitt aufweisen, um einen Sitz für ein zylindrisches Kabel mit einer entsprechenden Dimension zu bilden.

8. Kabelverschraubungsanordnung nach Anspruch 1 oder 2, **dadurch gekennzeichnet, dass** das Klemmmittel (2, 3, 4) ein Einsatzklemmelement (3) aufweist, welches zwischen dem ersten und dem zweiten Klemmelement (2, 4) angeordnet ist, und dass die zweiten Aussparungen (10) in dem Einsatzklemmelement (3) angeordnet sind, welche Aussparungen (10) sich in einer Längsrichtung des Kabels (5) erstrecken und einen halbkreisförmigen Querschnitt aufweisen, um einen Sitz für ein kreisförmiges Kabel mit einer entsprechenden Dimension zu bilden.

9. Kabelverschraubungsanordnung nach Anspruch 7 oder 8, **dadurch gekennzeichnet, dass** die Aussparungen (9, 10) unterschiedliche Durchmesser aufweisen, um Kabel mit verschiedenen Dimensionen aufnehmen zu können.

10. Kabelverschraubungsanordnung nach einem der obigen Ansprüche, **dadurch gekennzeichnet, dass** die Kabelverschraubungsanordnung (1) einen ersten und/oder einen zweiten Satz von Steckern (7, 8) aufweist, wobei die Stecker jedes Satzes miteinander verbunden sind und dazu ausgebildet sind, in die ersten und die zweiten Aussparungen (9, 10) in den Klemmmitteln (2, 3, 4) einzupassen.

11. Kabelverschraubungsanordnung nach einem der obigen Ansprüche, **dadurch gekennzeichnet, dass** die Kabelverschraubungsanordnung (1) dazu ausgebildet ist, eine Öffnung (12) der elektronischen Vorrichtung abzudecken, wenn sie an der elektronischen Vorrichtung befestigt ist, wobei die Öffnung (12) wesentlich größer ist als die, die durch das Kanalsystem (16) gebildet ist.

12. Kabelverschraubungsanordnung nach Anspruch 11, **dadurch gekennzeichnet, dass** die Öffnung (12) derart bemessen ist, dass ein Kabelverbinder (6) durch die Öffnung (12) hindurch passieren kann.

13. Kabelverschraubungsanordnung nach Anspruch 7, **dadurch gekennzeichnet, dass** zumindest eines des ersten oder des zweiten Klemmelements (2, 4) dazu ausgebildet ist, an einem Teil (13) der elektronischen Vorrichtung wasserdicht befestigt zu werden.

14. Kabelverschraubungsanordnung nach Anspruch 1, **dadurch gekennzeichnet, dass** das Dichtungsmittel eine flüssige Dichtungsmasse ist.

15. Verfahren zum Verbinden eines Kabels mit einer elektronischen Vorrichtung unter Verwendung einer Kabelverschraubungsanordnung nach einem der obigen Ansprüche, **dadurch gekennzeichnet, dass** es den Schritt des Einspeisens einer flüssigen Dichtungsmasse in das Kanalsystem (16) über den Einlass (18) umfasst.

## Revendications

1. Dispositif de raccord de câble pour raccorder un câble à un dispositif électronique, ledit dispositif de raccord de câble comprenant:
- un moyen d'étanchéité agencé pour assurer l'étanchéité autour du câble (5) et pour fixer le câble (5); et
- un moyen de serrage (2, 3, 4) pour enfermer le moyen d'étanchéité autour du câble (5) afin d'assurer l'étanchéité et de fixer le câble (5);
- dans lequel le dispositif de raccord de câble (1) est agencé pour être fixé de manière étanche à l'eau à une partie, telle qu'un boîtier (13), du dispositif électronique,
**caractérisé en ce que**
le moyen de serrage (2, 3, 4) comprend au moins un système à canaux (16) qui est agencé pour entourer de manière circonférentielle le câble (5), et **en ce que** ledit système à canaux (16) est agencé pour être rempli du moyen d'étanchéité,
dans lequel le système à canaux (16) est raccordé à une entrée (18) et une sortie (15) afin de permettre à un moyen d'étanchéité liquide d'être amené au système à canaux (16) via l'entrée (18).

2. Dispositif de raccord de câble selon la revendication 1, **caractérisé en ce que** ledit moyen de serrage (2, 3, 4), contenant ledit système à canaux (16), comprend au moins un premier et au moins un deuxième évidement (9, 10), et **en ce qu'**une première partie (20) dudit système à canaux (16) est arrangée dans lesdits premier et deuxième évidements (9, 10), et ladite première partie (20) dudit système à canaux (16) étant agencée pour entourer ledit câble (5).

3. Dispositif de raccord de câble selon la revendication 1 ou 2, **caractérisé en ce que** ledit moyen de serrage (2, 3, 4) comprend ledit système de canaux (16), et une deuxième partie (21) dudit système à canaux (16) est agencée pour s'étendre entre les premier et/ou deuxième évidements (9, 10) adjacents et pour les raccorder l'un à l'autre, afin de permettre audit moyen d'étanchéité de couler entre les premier et deuxième évidements adjacents (9, 10).

4. Dispositif de raccord de câble selon la revendication 3, **caractérisé en ce que** ladite deuxième partie (21) dudit système à canaux (16) est arrangée dans l'interface entre les moyens de serrage (2, 3, 4).

5. Dispositif de raccord de câble selon la revendication 3 à 4, **caractérisé en ce que** ladite première partie (20) dudit système à canaux (16) présente une coupe transversale en forme d'un demi-tube, et ladite deuxième partie (21) dudit système à canaux (16) présente une coupe transversale en forme d'un tube.

6. Dispositif de raccord de câble selon la revendication 1 à 5, **caractérisé en ce que** ledit système à canaux (16) est raccordé à une entrée (18), à travers laquelle ledit composé d'étanchéité est amené, et une sortie (15), à travers laquelle l'air contenu dans le système à canaux (16) et ledit composé d'étanchéité excédentaire sont agencés pour couler lorsque ledit canal (16) est rempli.

7. Dispositif de raccord de câble selon la revendication 1 ou 2, **caractérisé en ce que** ledit moyen de serrage (2, 3, 4) comprend un premier élément de serrage et un deuxième élément de serrage (2, 4), où lesdits premiers évidements (9) sont arrangés, lesdits évidements (9) s'étendant dans une direction longitudinale dudit câble (5) et présentant une coupe transversale semi-circulaire pour former un siège pour un câble cylindrique d'une dimension correspondante.

8. Dispositif de raccord de câble selon la revendication 1 ou 2, **caractérisé en ce que** ledit moyen de serrage (2, 3, 4) comprend un élément de serrage par insertion (3) qui est arrangé entre les premier et deuxième éléments de serrage (2, 4), et **en ce que** lesdits deuxièmes évidements (10) sont arrangés dans ledit élément de serrage par insertion (3), lesdits évidements (10) s'étendant dans une direction longitudinale dudit câble (5) et présentant une coupe transversale semi-circulaire pour former un siège pour un câble circulaire d'une dimension correspondante.

9. Dispositif de raccord de câble selon la revendication 7 ou 8, **caractérisé en ce que** les évidements (9, 10) présentent des diamètres différents pour recevoir des câbles de dimensions différentes.

10. Dispositif de raccord de câble selon l'une quelconque des revendications précédentes, **caractérisé en ce que** le dispositif de raccord de câble (1) comprend un premier et/ou un deuxième jeu de bouchons (7, 8), les bouchons dans chaque jeu étant reliés l'un à l'autre et agencés pour s'adapter dans les premier et deuxième évidements (9, 10) dans les éléments de serrage (2, 3, 4).

11. Dispositif de raccord de câble selon l'une quelconque des revendications précédentes, **caractérisé en ce que** le dispositif de raccord de câble (1) est agencé pour couvrir une ouverture (12) du dispositif électronique lorsqu'il est fixé au dispositif électronique, l'ouverture (12) étant sensiblement plus large que celle formée par le système à canaux (16).

12. Dispositif de raccord de câble selon la revendication 11, **caractérisé en ce que** l'ouverture (12) est dimensionnée à manière de permettre à un connecteur de câble (6) de passer à travers l'ouverture (12).

13. Dispositif de raccord de câble selon la revendication 7, **caractérisé en ce qu'**au moins l'un des premier ou deuxième éléments de serrage (2, 4) est agencé pour être fixé d'une manière étanche à l'eau à une partie (13) du dispositif électronique.

14. Dispositif de raccord de câble selon la revendication 1, **caractérisé en ce que** ledit moyen d'étanchéité est un composé d'étanchéité liquide.

15. Procédé pour raccorder un câble à un dispositif électronique en utilisant un dispositif de raccord de câble selon l'une quelconque des revendications précédentes,
**caractérisé en ce qu'**il comprend l'étape d'amener un composé d'étanchéité liquide au système à canaux (16) via l'entrée (18).
